# EUROPEAN PATENT APPLICATION

(11) **EP 3 346 407 A1**
(43) Date of publication of application: **11.07.2018**
(21) Application number: 17208412.1
(22) Date of filing: 19.12.2017
(51) Int. Cl.: G06F 21/55, G06F 21/56

(54) **MALWARE DETECTION THROUGH RUNNING PROCESS LIST MONITORING**

(30) Priority: 05.01.2017 JP 2017000745
(71) Applicant: FUJITSU LIMITED, Kanagawa 211-8588 (JP)
(72) Inventor: YOSHIMURA, Kunihiko, Kanagawa 211-8588 (JP)
(74) Representative: Hoffmann Eitle

(57) **Abstract**

A program that causes an information processing apparatus to execute a process, the process includes, executing a first program using a system including a kernel of an operating system (OS), acquiring a plurality of first process identifiers respectively indicating a plurality of first processes executed in the execution of the first program, executing a second program using the system, acquiring a plurality of second process identifiers respectively indicating a plurality of second processes executed in the execution of the second program, executing a similarity judgment process in which a similarity between the first program and the second program is judged by comparing the acquired plurality of first process identifiers and the plurality of second process identifiers, and outputting the judged similarity.

## Description

### TECHNICAL FIELD

The embodiments discussed herein are related to a program, an information processing apparatus and a method.

### BACKGROUND ART

There are conventional methods of detecting malware such as a computer virus, a worm, spyware, and the like that may be illicitly infectious to a device. In one of malware detection methods, an equality or a similarity of a behavior in terms of network address scanning is compared between software that performs an illicit process and software under judgment. In another method, a code is summarized and checked in terms of the equality to a code of malware. A literature of related techniques can be found, for example, in Japanese Patent No. 5083760.

### SUMMARY

### TECHNICAL PROBLEMS

However, the conventional techniques described above have a problem that it is difficult to detect a lot of various subspecies of malware that may occur from one piece of malware.

For example, subspecies of malware can be relatively easily created from original malware by changing a part, such as an attack target, of the original malware, and thus a lot of various subspecies of malware occur. These subspecies of malware are each different in terms of code and attack targets, and thus it is difficult to detect them by making a comparison with original malware in terms of code or a behavior associated with network address scanning. Furthermore, to detect these subspecies of malware, all subspecies of malware have to be collected, which is not easy to achieve.

In an aspect, it is an object to provide a similarity judgment program, a similarity judgment method, and an information processing apparatus, capable of easily detecting a lot of various subspecies of malware.

### SOLUTION TO PROBLEM

According to an aspect of the invention, a program that causes an information processing apparatus to execute a process, the process includes, executing a first program using a system including a kernel of an operating system (OS), acquiring a plurality of first process identifiers respectively indicating a plurality of first processes executed in the execution of the first program, executing a second program using the system, acquiring a plurality of second process identifiers respectively indicating a plurality of second processes executed in the execution of the second program, executing a similarity judgment process in which a similarity between the first program and the second program is judged by comparing the acquired plurality of first process identifiers and the plurality of second process identifiers, and outputting the judged similarity.

### ADVANTAGES EFFECT OF INVENTION

According to an aspect of the invention, it is possible to easily detect malware that may occur in a lot of various derivative forms.

### BRIEF DESCRIPTION OF DRAWINGS

FIG. 1 is a block diagram illustrating an example of a functional configuration of an information processing apparatus according to an embodiment;
FIG. 2 is a diagram illustrating a system environment;
FIG. 3 is a diagram illustrating API call information;
FIG. 4 is a diagram illustrating DLL reading information;
FIG. 5 is a diagram illustrating process information;
FIG. 6 is a flow chart illustrating an example of an operation of an information processing apparatus according to an embodiment;
FIG. 7 is a diagram illustrating a result output; and
FIG. 8 is block diagram illustrating an example of a hardware configuration of an information processing apparatus according to an embodiment.

### DESCRIPTION OF EMBODIMENTS

Referring to drawings, a similarity judgment program, a similarity judgment method, and an information processing apparatus according to embodiments are described below. In the embodiments, elements having the same functions are assigned the same symbols, and duplicated descriptions thereof are omitted. Note that the similarity judgment program, the similarity judgment method, and the information processing apparatus described below with reference to embodiments are given by way of example but not limitation. Also note that the embodiments described below may be properly combined as long as inconsistency occurs.

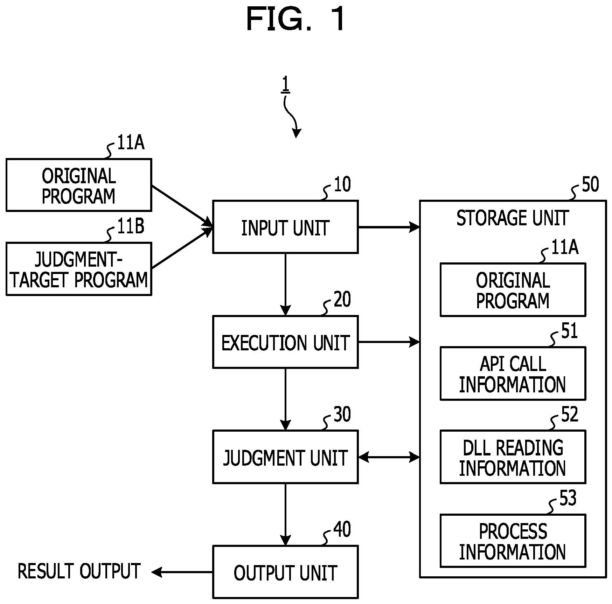

FIG. 1 is a block diagram illustrating an example of a functional configuration of an information processing apparatus according to an embodiment. As illustrated in FIG. 1, an information processing apparatus 1 is an apparatus configured to accept an input of an original program 11A that is software such as malware configured to perform an illicit process and that is to be used as a reference in checking. The information processing apparatus 1 also accepts an input of a judgment-target program 11B that is a program to be subjected to a judgment as to whether the program is malware or not. The information processing apparatus 1 compare the judgment-target program 11B and the original program 11A, and outputs a judgment result to a display or the like. As for the information processing apparatus 1, for example, a PC (Personal Computer) or the like may be used, and the information processing apparatus 1 includes an input unit 10, an execution unit 20, a judgment unit 30, an output unit 40, and a storage unit 50.

The input unit 10 accepts an input of data via reading the data from a storage medium such as a semiconductor memory, a DVD (Digital Versatile Disk), or the like or via communication using a communication network such as the Internet. More specifically, the input unit 10 accepts inputs of the original program 11A and the judgment-target program 11B. The original program 11A and the judgment-target program 11B are respectively examples of a first program and a second program. The input unit 10 outputs the accepted original program 11A and the accepted judgment-target program 11B to the execution unit 20. Furthermore, the input unit 10 stores the original program 11A in the storage unit 50.

The execution unit 20 is an example of an acquisition unit. The execution unit 20 executes the original program 11A and the judgment-target program 11B under a system environment of a particular OS (Operating System) and acquires various kinds of information in the execution.

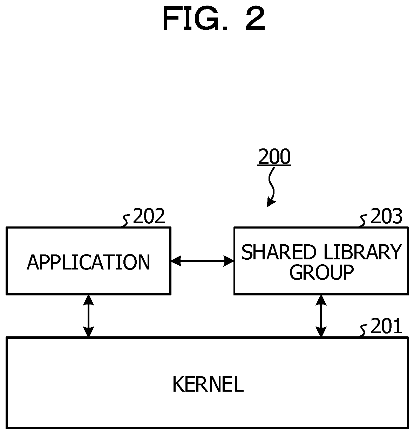

FIG. 2 is a diagram illustrating a system environment. As illustrated in FIG. 2, the system environment 200, which executes an application 202 such as the original program 11A, the judgment-target program 11B, or the like, includes a kernel 201 that is a core of the OS, and a shared library group 203 such as DLL (Dynamic Link Library). The system environment 200 is provided, for example, by an OS on the information processing apparatus 1 or an OS on a virtual machine realized in the information processing apparatus 1 using a virtual technique. Note that the OS may be of any type such as Linux (registered trademark), Windows (registered trademark), or the like.

The execution unit 20 monitors a system call during executing the application 202 such as the original program 11A, the judgment-target program 11B, or the like, and acquires API call information 51 such as the type of an API (Application Programming Interface) call called via a communication with the kernel 201, the number executions of the call, a calling order, or the like. The execution unit 20 stores, in the storage unit 50, the acquired API call information 51 together with identifiers (for example, program names) indicating the original program 11A and the judgment-target program 11B.

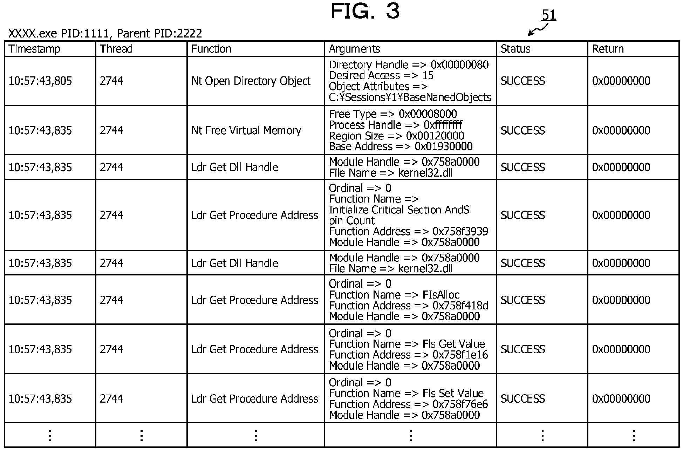

FIG. 3 is a diagram illustrating the API call information 51. As illustrated in FIG. 3, the API call information 51 includes information associated with API calls in execution of the application 202 in terms of "Timestamp", "Thread", "Function", "Arguments", "Status", "Return", etc.

"Timestamp" indicates a time of an API call, that is, a call order. "Thread" indicates a thread of an API call, and the number of API calls for the same thread indicates the number of executions of the call. "Function" indicates a function called by an API call. "Arguments" indicates an argument of an API call. "Status" indicates a status (for example, in terms of success/failure) of an API call. "Return" indicates an address to which an API call is to return.

The execution unit 20 also monitors reading of the shared library group 203 during the execution of the application 202 such as the original program 11A, the judgment-target program 11B, or the like, and the execution unit 20 acquires DLL reading information 52 regarding a file group of a shared library read out from the shared library group 203. The execution unit 20 stores, in the storage unit 50, the acquired DLL reading information 52 together with identifiers (for example, program names) indicating the input original program 11A and the judgment-target program 11B.

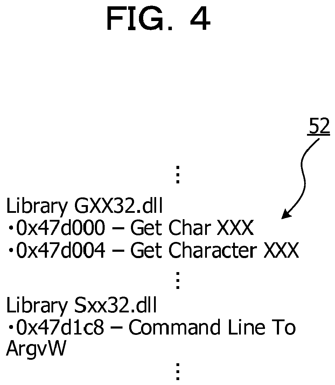

FIG. 4 is a diagram illustrating the DLL reading information 52. As illustrated in FIG. 4, the DLL reading information 52 is a list of a file group ("GXX32.dll", "Sxx32.dll",... etc.) read out from the shared library group 203 in the execution of the application 202.

The execution unit 20 also monitors a process during the execution of the application 202 such as the original program 11A, the judgment-target program 11B, or the like, and acquires process information 53 regarding the executed process. The execution unit 20 stores, in the storage unit 50, the acquired process information 53 together with identifiers (for example, program names) indicating the input original program 11A and the judgment-target program 11B.

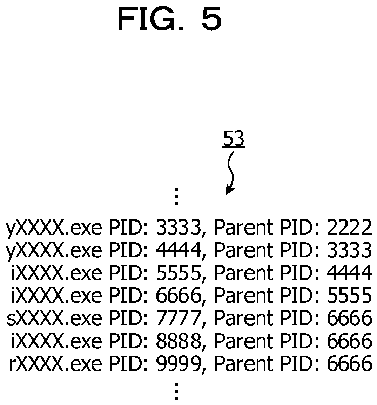

FIG. 5 is a diagram illustrating the process information 53. As illustrated in FIG. 5, the process information 53 is a list of processes in the execution of the application 202. More specifically, the process information 53 includes a process name (such as "yXXXX.exe") and a process ID (such as "PID: 3333") as process identifiers, and information indicating a parent process (such as "Parent PID: 2222") for each process in the execution. In the list of the processes in the process information 53, processes are described in the order in which the processes were executed. Note that the process information 53 may include a hash value (md5) of memory dump of a process.

The judgment unit 30 judges a similarity between the original program 11A and the judgment-target program 11B based on a result of a comparison between a code of the original program 11A and a code of the judgment-target program 11B or a comparison between information acquired in the execution of the original program 11A and information acquired in the execution of the judgment-target program 11B.

More specifically, the judgment unit 30 performs a static analysis to judge the similarity indicating the degree of similarity between codes by comparing the code of the original program 11A and the code of the judgment-target program 11B, and the judgment unit 30 outputs an analysis result to the output unit 40. The judgment unit 30 also performs a dynamic analysis to judge the similarity between the information acquired in the execution of the original program 11A and the information acquired in the execution of the judgment-target program 11B by comparing them, and the judgment unit 30 outputs an analysis result to the output unit 40.

More specifically, the judgment unit 30 compares an API call type, the number of executions of the API call, or information indicating a call order of first API calls included in the API call information 51 regarding the original program 11A with an API call type, the number of executions of the API call, or information indicating a call order of first API calls included in the API call information 51 regarding the judgment-target program 11B. The judgment unit 30 then calculates the similarity indicating the degree of similarity between the two pieces of information by performing scoring based on the equality/difference between the two pieces of information.

For example, a difference of subspecific malware from its original malware is limited to part of the malware such as an attack target, and thus a content of an API call is similar to that of the original malware. Therefore, by determining the similarity of the API call information 51 regarding the judgment-target program 11B with respect to the reference program, that is, the API call information 51 regarding the original program 11A, it is possible to easily detect a lot of various subspecies of malware that may occur from the original program 11A. For example, in a case where there is a high similarity (for example, higher than a predetermined value) between the API call information 51 regarding the judgment-target program 11B and the API call information 51 regarding the original program 11A which is the reference program, it can be determined that the judgment-target program 11B is malware.

Furthermore, the judgment unit 30 compares the DLL reading information 52 regarding the judgment-target program 11B with the DLL reading information 52 regarding the original program 11A and performs scoring based on equality/difference between these pieces of information thereby calculating the similarity indicating the degree of similarity between these pieces of information.

For example, a file of a shared library read out by the original malware and a file of a shared library read out by subspecific malware are similar to each other. Therefore, by determining the similarity between the DLL reading information 52 regarding the judgment-target program 11B and the DLL reading information 52 regarding the original program 11A which the reference program, it is possible to easily detect a lot of various subspecies of malware that may occur from the original program 11A. For example, in a case where there is a high similarity (for example, higher than a predetermined value) between the DLL reading information 52 regarding the judgment-target program 11B and the DLL reading information 52 regarding the original program 11A which is the reference program, it can be determined that the judgment-target program 11B is malware.

Furthermore, the judgment unit 30 compares the process information 53 regarding the judgment-target program 11B with the process information 53 regarding the original program 11A and performs scoring based on equality/difference between these pieces of information thereby calculating the similarity indicating the degree of similarity between these pieces of information.

For example, a process executed by the original malware and a process executed by subspecific malware are similar to each other. Therefore, by determining the similarity between the process information 53 regarding the judgment-target program 11B and the process information 53 regarding the original program 11A which is the reference program, it is possible to easily detect a lot of various subspecies of malware that may occur from the original program 11A. For example, in a case where there is a high similarity (for example, higher than a predetermined value) between the process information 53 regarding the judgment-target program 11B and the process information 53 regarding the original program 11A which is the reference program, it can be determined that the judgment-target program 11B is malware.

The judgment unit 30 may compare the process information 53 regarding the judgment-target program 11B with information indicating a feature obtained by aggregating processes included in the process information 53 regarding a plurality of original programs 11A, and the judgment unit 30 may output a similarity between the judgment-target program 11B and the plurality of original programs 11A.

More specifically, the judgment unit 30 aggregates the frequency of occurrence of processes included in the process information 53 regarding the plurality of original programs 11A and/or aggregates the frequency of occurrence of processes over the entire plurality of original programs 11A and thereby determines TF (Term Frequency)/IDF (Inverse Document Frequency), contrast set mining, or the like. The judgment unit 30 then compares TF/IDF or contrast set mining obtained by aggregating from the process information 53 regarding the plurality of original programs 11A with the process information 53 regarding the judgment-target program 11B, and outputs the similarity between the plurality of original programs 11A and the judgment-target program 11B.

The TF/IDF aggregated from the process information 53 regarding the plurality of original programs 11A indicates a feature specific to malware. Therefore, based on the comparison with TF/IDF aggregated from the process information 53 regarding the plurality of original programs 11A, it is possible to calculate the similarity emphasizing the feature specific to the malware.

The output unit 40 outputs the similarity, judged by the judgment unit 30, between the original program 11A and the judgment-target program 11B to a display, a file, or the like. A user is allowed to determine whether the judgment-target program 11B is malware or not by checking the output similarity.

The output unit 40 ranks the original programs 11A in the descending order of the similarity (the score) based on a result of the comparison of the plurality of original programs 11A with the judgment-target program 11B. Thereafter, the output unit 40 sorts the original programs 11A in the descending order of the score, and displays the judged score indicating the similarity with respect to the judgment-target program 11B for each original program 11A. This makes it possible for a user to easily find an original program 11A having a high similarity to the judgment-target program 11B from the plurality of original programs 11A.

Furthermore, the output unit 40 ranks judgment-target programs 11B in descending order of similarity (score) based on results of comparisons of a plurality of judgment-target programs 11B with the original program 11A. The output unit 40 then sorts the judgment-target programs 11B in descending order of score, and displays scores indicating similarities determined for the respective judgment-target programs 11B with respect to the original program 11A. This allows a user to easily find a judgment-target program 11B with a high similarity with the original program 11A from a plurality of judgment-target programs 11B. In the present embodiment, by way of example, based on results of comparisons of a plurality of original programs 11A with the judgment-target program 11B, the original programs 11A are sorted in the order of score and displayed.

The storage unit 50 is a storage apparatus such as an HDD (Hard Disk Drive). The storage unit 50 stores the original program 11A that is the reference program and the API call information 51, the DLL reading information 52, and the process information 53 regarding each program.

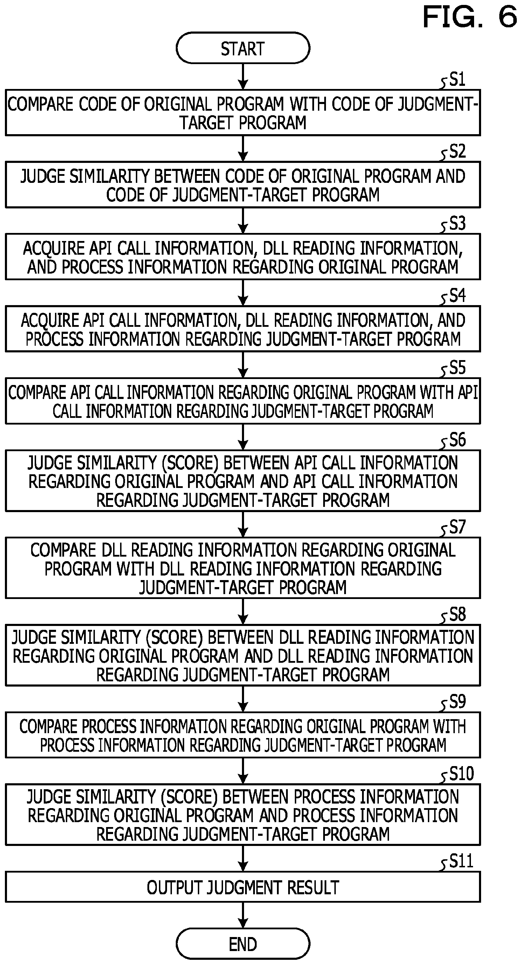

FIG. 6 is a flow chart illustrating an example of an operation of the information processing apparatus 1 according to the embodiment. Note that it is assumed that the original program 11A has been input before the process is started, and the original program 11A and the API call information 51, the DLL reading information 52, and the process information 53 regarding the original program 11A have already been stored (acquired) in the storage unit 50. On the other hand, the judgment-target program 11B is input when the process is started.

As illustrated in FIG. 6, when the process is started, the judgment unit 30 reads out the original program 11A from the storage unit 50 and compares the code of the input judgment-target program 11B with the code of the read-out original program 11A by using a difference tool (for example, Diff) (S1).

Thereafter, based on a result of the comparison in S1, the judgment unit 30 determines the similarity between the code of the judgment-target program 11B and the code of the original program 11A (S2). More specifically, the judgment unit 30 determines a score indicating the similarity between the codes based on the amount of difference detected by the difference tool.

Thereafter, the judgment unit 30 acquires the API call information 51, the DLL reading information 52, and the process information 53 regarding the original program 11A stored in the storage unit 50 (S3).

Thereafter, the execution unit 20 executes the input judgment-target program 11B and acquires the API call information 51, the DLL reading information 52, and the process information 53 regarding the judgment-target program 11B (S4). The execution unit 20 stores the acquired API call information 51, the DLL reading information 52, and the process information 53 regarding the judgment-target program 11B in the storage unit 50 and also outputs them to the judgment unit 30.

Thereafter, the judgment unit 30 compares the API call information 51 regarding the judgment-target program 11B with the API call information 51 regarding the original program 11A (S5). Thereafter, the judgment unit 30 performs scoring based on equality/difference between these pieces of information and thereby judges the similarity (the score) between the API call information 51 regarding the judgment-target program 11B and the API call information 51 regarding the original program 11A (S6).

In the judgment as to the similarity in S6, the similarity degree between an N-gram model of the API call information 51 regarding the judgment-target program 11B and an N-gram model of the API call information 51 regarding the original program 11A may be determined as the score.

More specifically, based on the API call information 51 regarding the original program 11A, the judgment unit 30 determines information indicating the order of occurrence of API calls (for example, obtained by sorting according to "Timestamp" in FIG. 3). Thereafter, the judgment unit 30 determines a frequency of occurrence indicating a frequency of occurrence of combinations of N API calls, sequentially for each combination, thereby obtaining an N-gram model based on the API call information 51 regarding the original program 11A.

Similarly, based on the API call information 51 regarding the judgment-target program 11B, the judgment unit 30 determines information indicating the order of occurrence of API calls. Thereafter, the judgment unit 30 determines a frequency of occurrence indicating a frequency of occurrence of combinations of N API calls, sequentially for each combination, thereby obtaining an N-gram model based on the API call information 51 regarding the judgment-target program 11B. Thereafter, the judgment unit 30 determines the similarity by calculating the score indicating the similarity degree between the two N-gram models. As described above, by determining the similarity between the N-gram model of the API call information 51 regarding the judgment-target program 11B and the N-gram model of the API call information 51 regarding the original program 11A, it is possible to obtain the similarity taking into account the call order of the API calls.

In the judgment as to the similarity in S6, the score may be given by a cosine similarity in a vector space between a vector based on the API call information 51 regarding the judgment-target program 11B and a vector based on the API call information 51 regarding the original program 11A. More specifically, the judgment unit 30 determines a vector including, as components, the API call type, the number of executions of the API call, the call order of the API call, etc. included in the API call information 51 regarding the original program 11A. Furthermore, the judgment unit 30 determines a vector including, as components, the API call type, the number of executions of the API call, the call order of the API call, etc. included in the API call information 51 regarding the judgment-target program 11B. The judgment unit 30 then determines the cosine similarity between the vectors in the vector space. That is, the judgment unit 30 may determine the score based on the cosine similarity as described above.

Thereafter, the judgment unit 30 compares the DLL reading information 52 regarding the judgment-target program 11B with the DLL reading information 52 regarding the original program 11A (S7). Thereafter, the judgment unit 30 performs scoring based on the equality/difference between the pieces of information, and thereby judges the similarity (the score) between the DLL reading information 52 regarding the judgment-target program 11B and the DLL reading information 52 regarding the original program 11A (S8).

In the judgment as to the similarity in S8, a set including as elements files included in the DLL reading information 52 regarding the judgment-target program 11B is compared with a set including as elements files included in the DLL reading information 52 regarding the original program 11A, and a Jaccard index indicating the similarity between the sets may be employed as the score. More specifically, the judgment unit 30 determines the Jaccard index whose denominator is given by the number of elements included in a result of an OR operation between the two sets and whose numerator is given by the number of elements included in a result of an AND operation between the two sets. As described above, the judgment unit 30 may determine the similarity degree between the set of files called from the shared library group 203 by the original program 11A and the set of files called from the shared library group 203 by the judgment-target program 11B.

Thereafter, the judgment unit 30 compares the process information 53 regarding the judgment-target program 11B with the process information 53 regarding the original program 11A (S9). Thereafter, the judgment unit 30 performs scoring based on equality/difference between these pieces of information and thereby judges the similarity (the score) between the process information 53 regarding the judgment-target program 11B and the process information 53 regarding the original program 11A (S10).

In the judgment as to the similarity in S10, a set including as elements processes included in the process information 53 regarding the judgment-target program 11B may be compared with a set including as elements processes included in the process information 53 regarding the original program 11A, and a Jaccard index indicating the similarity between the sets may be employed as the score.

Furthermore, the judgment unit 30 may determine, as the score, the similarity degree between the order of processes included in the process information 53 regarding the judgment-target program 11B and the order of processes included in the process information 53 regarding the original program 11A. For example, the score may be a value depending on identical parts between the two sets in terms of the order or executions of processes.

Furthermore, the judgment unit 30 may determine, as the score, the similarity degree between a form of a process tree of processes included in the process information 53 regarding the judgment-target program 11B and a form of a process tree of processes included in the process information 53 regarding the original program 11A.

For example, let it be assumed that a list of processes included in the process information 53 regarding the original program 11A is given as "processA.exe ppid 1111 pid 2222processB.exe ppid 2222 pid 3333processC.exe ppid 3333 pid 4444".

In this case, the form of the process tree is given as "processA.exe" - "processB.exe" - "processC.exe".

On the other hand, let it be assumed that a list of processes included in the process information 53 regarding the judgment-target program 11B is given as "processA.exe ppid 1111 pid 2222processB.exe ppid 2222 pid 3333processC.exe ppid 2222 pid 4444".

In this case, the form of the process tree is given as "processA.exe" - "processB.exe" "processA.exe" - "processC.exe".

When the two process tree forms described above are compared, it can be seen that there is a difference in a process that generates "processC.exe". Thus, by calculating the similarity between the process tree forms, it is possible to accurately detect a similar program.

As described above, the judgment unit 30 may determine the similarity degree between a set of processes executed by the judgment-target program 11B and a set of processes executed by the original program 11A.

Note that the identifier of each process used in determining the similarity degree is not limited to the process name, the process ID, or the like. As for the identifier of each process, summary information indicating a summary of the process, for example, a hash value (md5) of memory dump of the process may be employed.

For example, let it be assumed that a list of processes included in the process information 53 regarding the original program 11A is given as "processA.exe ppid 1111 pid 2222 md5 aaabbbbprocessB.exe ppid 2222 pid 3333 md5 bbbbbbbprocessC.exe ppid 3333 pid 4444 md5 ccccccc".

Furthermore, let it be assumed that a list of processes included in the process information 53 regarding the judgment-target program 11B is given as "processA.exe ppid 1111 pid 2222 md5 aaaaaaaprocessB.exe ppid 2222 pid 3333 md5 bbbbbbbprocessC.exe ppid 2222 pid 4444 md5 ccccccc".

It can be seen, from a comparison between the above-described two lists of processes, that the process names are identical for "processA.exe", but hash values are different ("aaabbbb" and "aaaaaaa"). Thus, by calculating the similarity based on the hash values of processes, it is possible to accurately detect a similar program.

Thereafter, the output unit 40 outputs the result of the judgment made by the judgment unit 30 in S2, S6, S8, and S10, that is, the similarity between the judgment-target program 11B and the original program 11A to a display or a file (S11).

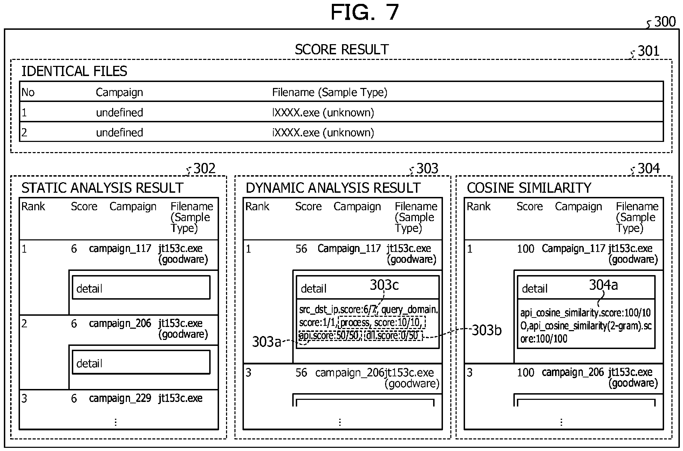

FIG. 7 is a diagram illustrating a result output. As illustrated in FIG. 7, the output unit 40 displays, on a display screen 300, the result of the judgment made by the judgment unit 30 in S2, S6, S8, and S10. This makes it possible for a user to determine whether the judgment-target program 11B is malware or not.

More specifically, the display screen 300 includes a file display area 301 and result display areas 302 to 304. The file display area 301 is an area in which a list of original programs 11A is displayed in the descending order of the similarity (the score) according to a result of comparison between the judgment-target program 11B and the plurality of original programs 11A. This file display area 301 allows a user to easily find original programs 11A with high similarities with respect to the judgment-target program 11B.

The result display area 302 is an area in which a result of static analysis is displayed as to the similarity degree between the code of the judgment-target program 11B and codes of original programs 11A. This result display area 302 allows a user to easily know the similarity degree of the code between the original program 11A and the judgment-target program 11B.

The result display area 303 is an area in which a result is displayed as to dynamic analysis based on a comparison between original programs 11A in execution and the judgment-target program 11B in execution. More specifically, the result display area 303 includes a score 303a based on the comparison between the API call information 51 regarding the original program 11A and the API call information 51 regarding the judgment-target program 11B. This score 303a allows a user to easily know the similarity degree between the content of the API call in the execution of the original program 11A and the content of the API call in the execution of the judgment-target program 11B.

The result display area 303 also includes a score 303b based on the comparison between the DLL reading information 52 regarding the original program 11A and the DLL reading information 52 regarding the judgment-target program 11B. This score 303b allows a user to easily know the similarity degree between the file group of the shared library called in the execution of the original program 11A and the file group of the shared library called in the execution of the judgment-target program 11B.

The result display area 303 also includes a score 303c based on the comparison between the process information 53 regarding the original program 11A and the process information 53 regarding the judgment-target program 11B. This score 303c allows a user to easily know the similarity degree between the process in the execution of the original program 11A and the process in the execution of the judgment-target program 11B.

The result display area 304 is an area in which a score 304a is displayed as to the cosine similarity based on the comparison between the API call information 51 regarding the original program 11A and the API call information 51 regarding the judgment-target program 11B. This score 304a allows a user to easily know the cosine similarity between the content of the API call in the execution of the original program 11A and the content of the API call in the execution of the judgment-target program 11B.

As described above, the information processing apparatus 1 executes the original program 11A under the system environment 200, and acquires process information indicating a process executed. The information processing apparatus 1 also executes the judgment-target program 11B under the system environment 200, and acquires process information indicating a process executed. Furthermore, the information processing apparatus 1 compares the process information of the judgment-target program 11B and the process information of the original program 11A, and determines the similarity between the judgment-target program 11B and the original program 11A according to a result of the comparison and outputs the resultant similarity. Thus, a user is allowed to easily detect malware which may be one of a lot of various subspecies of malware created from the original program 11A without collecting all subspecies of malware as the original programs 11A.

Note that constituent elements of each apparatus illustrated in figures do not have to be physically configured as illustrated in the figures. That is, a specific configuration of each apparatus in terms of division or combination of elements is not limited to those illustrated in the figures, but all or part of the elements may be physically separated or combined in arbitrary units depending on various loads or usage situations.

Regarding various processing functions performed by the information processing apparatus 1, all or part of them may be executed on a CPU (or a microcomputer such as an MPU, an MCU (Micro Controller Unit), or the like). Regarding various processing functions, as a matter of course, all or part of them may be executed on a program interpreted and executed on a CPU (or a microcomputer such as an MPU, an MCU (Micro Controller Unit), or the like), or on wired logic hardware. Regarding various processing functions performed by the information processing apparatus 1, they may be executed by a plurality of computers in cooperation by using cloud computing.

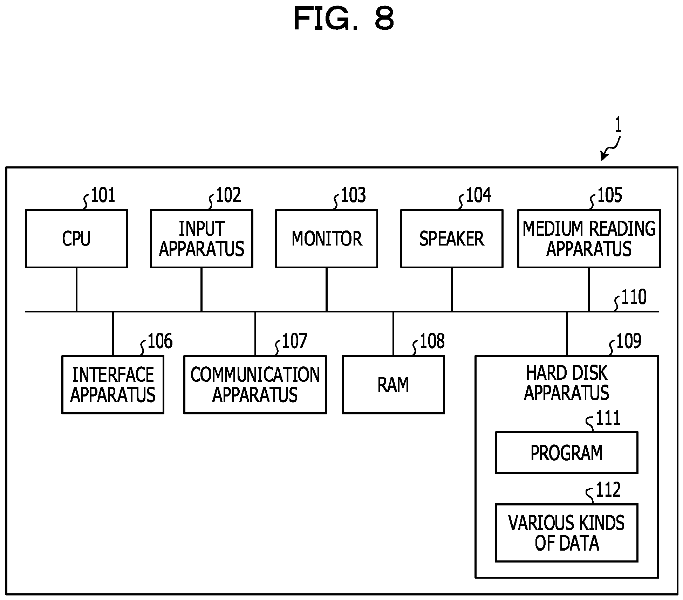

Note that various processes described above with reference to the embodiments may be realized by executing a program prepared in advance on a computer. Thus, next, an example of a computer (hardware) is described below that executes a program to realize functions similar to the functions realized in the embodiments described above. FIG. 8 is block diagram illustrating an example of a hardware configuration of the information processing apparatus 1 according to an embodiment.

As illustrated in FIG. 8, an information processing apparatus 1 is an apparatus configured to a CPU 101 configured to execute various operations and processes, an input apparatus 102 configured to accept data input, a monitor 103, and a speaker 104. The information processing apparatus 1 also includes a medium reading apparatus 105 configured to read out a program or the like from a storage medium, an interface apparatus 106 for coupling to various apparatuses, and a communication apparatus 107 for coupling to an external device to perform wireless or wired communication. The information processing apparatus 1 further includes a RAM 108 configured to temporarily store various kinds of information, and a hard disk apparatus 109. Each unit (101 to 109) in the information processing apparatus 1 is coupled to a bus 110.

The hard disk apparatus 109 stores a program 111 for executing various processes at the input unit 10, the execution unit 20, the judgment unit 30, and the output unit 40 described above with reference to the embodiments. The hard disk apparatus 109 also stores various kinds of data 112 to be referred to by the program 111. The input apparatus 102 accepts, for example, an input of operation information performed by an operator on the information processing apparatus 1. The monitor 103 displays, for example, various screens to be operated by an operator. The interface apparatus 106 is coupled, for example, to a printing apparatus or the like. The communication apparatus 107 is coupled to a communication network such as a LAN (Local Area Network) and thereby transmits and receives various kinds of information to and from an external device via the communication network.

The CPU 101 reads out the program 111 stored in the hard disk apparatus 109 and load the program 111 in the RAM 108, and the CPU 101 executes the program 111 loaded in the RAM 108 thereby achieving various processes. The program 111 may not be stored in the hard disk apparatus 109. For example, the information processing apparatus 1 may read out the program 111 stored in a readable storage medium and may execute the program 111. As for the storage medium readable by the information processing apparatus 1, for example, a CD-ROM or DVD disk, a portable storage medium such as USB (Universal Serial Bus) memory or a storage medium of a similar type, a semiconductor memory such as a flash memory, a hard disk drive or the like may be employed. The program 111 may be stored in an apparatus coupled to a public line, the Internet, a LAN, or the like, and the information processing apparatus 1 may read out the program 111 from the apparatus and execute the program 111.

### [Reference Signs List]

1 information processing apparatus
10 input unit
11A original program
11B judgment-target program
20 execution unit
30 judgment unit
40 output unit
50 storage unit
51 API call information
52 DLL reading information
53 process information
101 CPU
102 input apparatus
103 monitor
104 speaker
105 medium reading apparatus
106 interface apparatus
107 communication apparatus
108 RAM
109 hard disk apparatus
110 bus
111 program
112 various kinds of data
200 system environment
201 kernel
202 application
203 shared library group
300 display screen
301 file display area
302 to 304 result display area
303a, 303b, 303c, 304a score

## Claims

1. A program that causes an information processing apparatus to execute a process, the process comprising:
executing a first program using a system including a kernel of an operating system (OS);
acquiring a plurality of first process identifiers respectively indicating a plurality of first processes executed in the execution of the first program;
executing a second program using the system;
acquiring a plurality of second process identifiers respectively indicating a plurality of second processes executed in the execution of the second program;
executing a similarity judgment process in which a similarity between the first program and the second program is judged by comparing the acquired plurality of first process identifiers and the plurality of second process identifiers; and
outputting the judged similarity.

2. The program according to claim 1, wherein in the similarity judgment process, the similarity is given by a Jaccard index between a set including as elements processes included in the plurality of first processes and a set including as elements processes included in the plurality of second processes.

3. The program according to claim 1, wherein the plurality of first process identifiers and the plurality of second process identifiers are respectively process names of the plurality of executed first processes and process names of the plurality of executed second processes.

4. An information processing apparatus comprising:
a memory; and
a processor coupled to the memory and configured to:
execute a first program using a system including a kernel of an operating system (OS),
acquire a plurality of first process identifiers respectively indicating a plurality of first processes executed in the execution of the first program,
execute a second program using the system,
acquire a plurality of second process identifiers respectively indicating a plurality of second processes executed in the execution of the second program;
executing a similarity judgment process in which a similarity between the first program and the second program is judged by comparing the acquired plurality of first process identifiers and the plurality of second process identifiers, and
outputting the judged similarity.

5. The information processing apparatus according to claim 4, wherein in the similarity judgment process, the similarity is given by a Jaccard index between a set including as elements processes included in the plurality of first processes and a set including as elements processes included in the plurality of second processes.

6. The information processing apparatus according to claim 4, wherein the plurality of first process identifiers and the plurality of second process identifiers are respectively process names of the plurality of executed first processes and process names of the plurality of executed second processes.

7. A method executed by a computer, the method comprising:
executing a first program using a system including a kernel of an operating system (OS);
acquiring a plurality of first process identifiers respectively indicating a plurality of first processes executed in the execution of the first program;
executing a second program using the system;
acquiring a plurality of second process identifiers respectively indicating a plurality of second processes executed in the execution of the second program;
executing a similarity judgment process in which a similarity between the first program and the second program is judged by comparing the acquired plurality of first process identifiers and the plurality of second process identifiers; and
outputting the judged similarity.

8. The method according to claim 7, wherein in the similarity judgment process, the similarity is given by a Jaccard index between a set including as elements processes included in the plurality of first processes and a set including as elements processes included in the plurality of second processes.

9. The method according to claim 7, wherein the plurality of first process identifiers and the plurality of second process identifiers are respectively process names of the plurality of executed first processes and process names of the plurality of executed second processes.
